# EUROPEAN PATENT SPECIFICATION

(11) **EP 0 568 377 B1**
(45) Date of publication and mention of the grant of the patent: **16.12.1998**
(21) Application number: 93303374.8
(22) Date of filing: 29.04.1993
(51) Int. Cl.: G11B 15/467

(54) **Magnetic recording and/or reproducing apparatus**
Magnetisches Aufnahme und/oder Wiedergabegerät
Appareil d'enregistrement et/ou de reproduction magnétique

(30) Priority: 30.04.1992 JP 137944/92
(43) Date of publication of application: 03.11.1993
(73) Proprietor: SONY CORPORATION, Tokyo (JP)
(72) Inventor: Yoshihiro, Mitsugu, c/o Sony Corporation, Tokyo 141 (JP); Sugizaki, Kazuyuki, c/o Sony Corporation, Tokyo 141 (JP); Kita, Mikio, c/o Sony Corporation, Tokyo 141 (JP); Shimizu, Osamu, c/o Sony Corporation, Tokyo 141 (JP)
(74) Representative: Robinson, Nigel Alexander Julian

(56) References cited:
- EP-A- 0 223 236
- EP-A- 0 380 284
- EP-A- 0 458 531

## Description

This invention relates to a magnetic recording and/ or reproducing apparatus, and is applicable to, for example, a video tape recorder for recording and/or reproducing digital video signals.

Heretofore, there has been a type of a video tape recorder in which a video signal is converted into a digital signal (hereinafter referred to as digital video signal) for recording and/or reproducing.

Namely, a digital video signal does not cause any deteriorating of picture quality even if repeatedly processed, so as to effectively prevent the picture quality deterioration of a reproduced picture even when dubbing are repeatedly taken place, by using combinations of error correcting processes etc..

By the way, in such a type of video tape recorder, it can be considered that if recording tracks can be formed with more density, the total recording density would be proportionally enhanced.

However, in the tracking control used in the conventional video tape recorder, it has been difficult to perform a tracking control of high-accuracy. Therefore, if the recording track is formed with high density, there would arise a problem that the tracking would not be securely controlled.

Namely, in the conventional tracking control, a control signal (CTL) is recorded on a control track formed in the longitudinal direction of the magnetic tape, and the tracking control is carried out using this control signal (hereinafter referred to as CTL method).

That is, in such a method, when the recording is performed in the video tape recorder, the control track is formed in the longitudinal direction of the magnetic tape and the control signal with a signal level varying in synchronicity with the rotation of the rotary drum is recorded on this control track.

On the contrary, when the reproducing is performed in the video tape recorder, the control signal and a reference signal synchronized with the rotation of the rotary drum are compared in phase to each other, and the phase of a capstan motor is controlled on the basis of the result of the phase comparison.

However, in magnetic tape, the distance between a recording position of a control signal and a recording track formed diagonally on the magnetic tape could sometimes vary due to a dispersion of the tape tension at the recording and/or reproducing time, change of the magnetic tape with the passage of time, change of the magnetic tape driving system, etc..

Therefore, in conclusion, it is difficult to perform the tracking control with high accuracy in this CTL method. If the recording track is formed with high density, accurate tracking would sometimes become impossible.

Meanwhile, there is conventionally known another method for tracking control in which a predetermined pilot signal is recorded on the recording track along with picture signals and is used as a basis for the tracking control.

Namely, in this method, a burst signal of low frequency and less azimuth loss is selected as the pilot signal, which is recorded on the recording track at the time of recording.

On the other hand, at the time of reproduction, in this tracking control, the level of this pilot signal leaked from contiguous tracks in front and rear thereof is detected, and the capstan motor is phase-controlled to minimize the signal level.

However, in this method, when the recording and/or reproducing efficiency of the magnetic head is dispersed, for example, the position of the minimum pilot signal level and the optimum scanning position of the magnetic head could be get out of position. Therefore, if the recording track is formed with high density, also in this method it would be difficult to securely perform the tracking control.

Further in this method, if an inserting tape edition is repeated, the positional divergence would be accumulated so as to eventually cause a disordered reproducing picture before and after the inserting edition.

In contrast, there is also another method in which a signal level of a reproducing signal obtained from the recording track is detected, so that the tracking control is executed to maximize the signal level.

In this method, however, the signal level of the reproducing signal would change even by picture patterns etc. since the signal level of a picture signal is detected, thereby making it difficult to perform the tracking control with high accuracy.

Further, in such a method, due to the use of the azimuth recording method in a video tape recorder, if equal to or more than one track is tracked off, almost no reproducing signal could be detected, making the tracking control itself difficult to be executed.

Even when the range to be tracked off is less than one track, a disadvantage that a certain time would be required for just tracking would arise.

In view of the foregoing, an object of this invention is to provide a magnetic recording and/or reproducing apparatus being capable of securely executing the tracking control even when the recording track is formed at high density.

European Published Patent Application EP-A-0 380 284 discloses a tracking control system in which signals of different attenuation with azimuth are formed on each helical track and the cross talk from adjacent tracks measured and used to adjust the tracking, as reflected by the preamble of claim 1.

Viewed from one aspect the invention provides a magnetic recording and/or reproducing apparatus as described in claim 1.

The invention may be embodied by the provision of a magnetic recording and/or reproducing apparatus 10 in which by the use of a plurality of magnetic heads A to D disposed on a rotary drum 12, recording tracks TA, TB, TC, TD, ... are formed in order helically in the longitudinal direction of a magnetic tape 2 for azimuthally recording a predetermined recording signal SREC, wherein a first pilot signal SP1 of high frequency subject to azimuth loss and a second pilot signal SP2 of low frequency with less azimuth loss are recorded on the recording tracks TA, TB, TC, TD, .. at the time of recording the recording signal SREC, and when the recording signal SREC is reproduced, a tracking control is executed on the basis of a reproduced signal SR of the first and second pilot signals SP1 and SP2.

Further, the recording tracks TA, TB, TC, TD, ... may have first and second recording areas ARP1 and ARP2 in the longitudinal direction thereon with the first pilot signal SP1 recorded on the first recording area ARP1 and the second pilot signal SP2 recorded on the second recording area ARP2.

Further, the recording tracks TA, TB, TC, TD, ... may have a first recording area ARP1 substantially at the center in the longitudinal direction thereon and a second recording area ARP2 at a scanning start end of the magnetic heads A to D with a predetermined distance from the first recording area ARP1, the first pilot signal SP1 being recorded on the first recording area ARP1, the second pilot signal SP2 being recorded on the second recording area, and a predetermined recording signal SREC being recorded at an area between the first and the second recording areas ARP1 and ARP2.

Further, the recording tracks TA, TC, TC, TD, ... may have a first and a second recording areas ARP1 and ARP2 in the longitudinal direction thereon, the first pilot signal SP1 being recorded on the first recording area ARP1, the second pilot signal SP2 being recorded on the first recording track TB between the first and the second recording tracks TB and TC which are successive in the longitudinal direction of the magnetic tape 2, a guard signal of high frequency subject to azimuth loss being recorded on the subsequent second recording track TC, or a signal-free area being formed on the second recording track TC.

Further, the recording tracks TA, TB, TC, TD, ... may have first and second recording areas ARP1 and ARP2 in the longitudinal direction thereon, the first pilot signal being recorded on the first recording area ARP1, and the second pilot signal SP2 being recorded in a phase-matched state with that of the contiguous recording tracks TA and TB on the second recording area ARP2.

Further, the magnetic heads A to D may be arranged such that the magnetic heads having positive and negative azimuth angles A and B (C and D) together form a pair so as to form recording tracks TA and TB (TC and TD) having positive and negative azimuth angles are alternately formed in order in the longitudinal direction of the magnetic tape 2, and in the first recording area ARP1 the first pilot signal SP1 is recorded on the recording track TA or TB (TC or TD) of positive or negative azimuth angle while a signal-free area is formed on the subsequent recording track TB or TA (TD or TC) of negative or positive azimuth angle.

Further, the recording tracks TA, TB, TC, TD, ...may have a first recording area ARP1 in the longitudinal direction thereon and a second recording area ARP2 at a scanning start end side of the magnetic heads A to D with a predetermined distance from the first recording area ARP1, the first pilot signal SP1 being recorded on the first recording area ARP1, the second pilot signal SP2 being recorded on the second recording area ARP2, and a predetermined recording signal SREC being recorded at an area between the first and the second recording areas ARPl and ARP2, the magnetic heads A to D being arranged such that the magnetic heads A and B (C and D) having positive and negative azimuth angles together form pairs so as to form recording track TA or TB (TC or TD) of positive and negative azimuth angles alternately in order in the longitudinal direction of the magnetic tape 2, and the magnetic heads A and B (C and D) having positive and negative azimuth angles being located on the rotary drum 12 in such a manner that the magnetic head B or A (D or C) having negative or positive azimuth angle scans the second recording area ARP2 at the same timing as the magnetic head A or B (C or D) having positive or negative azimuth angle scans the first recording area ARP1.

Further, the tracking control may be executed in such a manner that the timing of reproducing the second pilot signal SP2 is detected with a predetermined reference signal PG as a basis, the magnetic tape driving system 22 being controlled on the basis of the result of the timing detection so that the signal level of the reproducing signal SR of the first pilot signal SP1 becomes maximum.

By recording the first pilot signal SP1 of high frequency subject to azimuth loss and the second pilot signal SP2 of low frequency with less azimuth loss, and by performing the tracking control on the basis of the reproducing signal SR of the first and the second pilot signal SP1 and SP2 at the time of reproduction, the tracking accuracy can be enhanced by effective use of the advantages of the first pilot signal of high frequency subject to the azimuth loss and of the second pilot signal SP2 of low frequency with less azimuth loss.

At this time, if a first and second recording areas ARP1 and ARP2 are formed in the longitudinal direction on the recording tracks TA, TB, TC, TD, ..., the first pilot signal SP1 is recorded on the first recording area ARP1, and the second pilot signal SP2 is recorded on the second recording area ARP2, the first and the second pilot signals SP1 and SP2 can be easily separated at the time of reproduction.

Further, if a predetermined recording signal SREC is recorded at an area between the first and the second recording areas ARP1 and ARP2, the recording density can be enhanced by an effective use of an area between the first and the second recording areas ARP1 and ARP2.

On the second recording area ARP2, between the successive first and second recording tracks TB and TC, if the second pilot signal SP2 is recorded on the first recording track TB, a guard signal of high frequency subject to azimuth loss is recorded on the successive recording track TC, or a signal-free are on the second recording track TC, it becomes possible to prevent undesirable effects to be generated as a cross-talk from the contiguous recording track TC.

On the other hand, reproducing signals without any waveform distortion can be obtained by recording the second pilot signal in phase-matched state for contiguous tracks.

Meanwhile, on the first recording area ARP1, if the first pilot signal SP1 is recorded on the recording track TA or TB (TC or TD) of positive or negative azimuth angle, and a signal-free area is formed on the subsequent recording track TB or TA (TD or TC) of negative or positive azimuth angle, the signal level of the reproducing signal can be varied in accordance with the off-track amount

Further, for the magnetic heads A and B (C and D) having positive and negative azimuth angles, if the magnetic head B or A (D or C) having negative or positive azimuth angle is disposed on the rotary drum to scan the second recording area ARP2 at the same timing as the magnetic head A or B (C or D) having positive or negative azimuth angle scans the first recording area ARP1, it would become possible to prevent the leakage of a recording signal SREC even when the inserting edition is executed.

Further, if the timing of reproducing the second pilot signal SP2 is detected with a predetermined reference signal PG as a basis, the magnetic tape driving system 22 is controlled on the basis of the result of the timing detection, the signal of the reproducing signal SR of the first pilot signal SP1 is detected, and the magnetic tape driving system is controlled so as to maximize the signal level of the reproducing signal SR, it would become possible to perform rough tracking control using the second pilot signal SP2 and fine tracking control using the first pilot signal SP1.

An embodiment of the invention will now be described, by way of example only, with reference to the accompanying drawings in which:
Fig. 1 is a schematic view showing a recording format of a video tape recorder according to one embodiment of the present invention;
Fig. 2 is a schematic view showing the composition of Fig. 1 in more detail;
Fig. 3 is a schematic view for an explanation of tracking servo using a second pilot signal thereof;
Fig. 4 is a schematic view for an explanation of tracking servo using a first pilot signal thereof;
Fig. 5 is a block diagram showing a video tape recorder incorporating the tracking servo;
Figs. 6A and 6B are signal wave diagrams for an explanation of signal leakage when a space between a first and a second recording areas is increased;
Figs. 7A and 7B are signal waveform diagrams for an explanation of signal leakage when the space between the first and second recording areas is reduced;
Figs. 8A and 8B are signal wave diagrams for an explanation of signal leakage in the video tape recorder of the shown embodiment;
Fig. 9 is a schematic view for an explanation of a case where the first and the second recording areas are closely formed;
Fig. 10 is a schematic view for an explanation of a case where the first and the second recording areas are formed remote from each other; and
Fig. 11 is a block diagram showing a composition of a practical tracking servo circuit.

Preferred embodiments of this invention will be described with reference to the accompanying drawings:

### (1) Recording Format

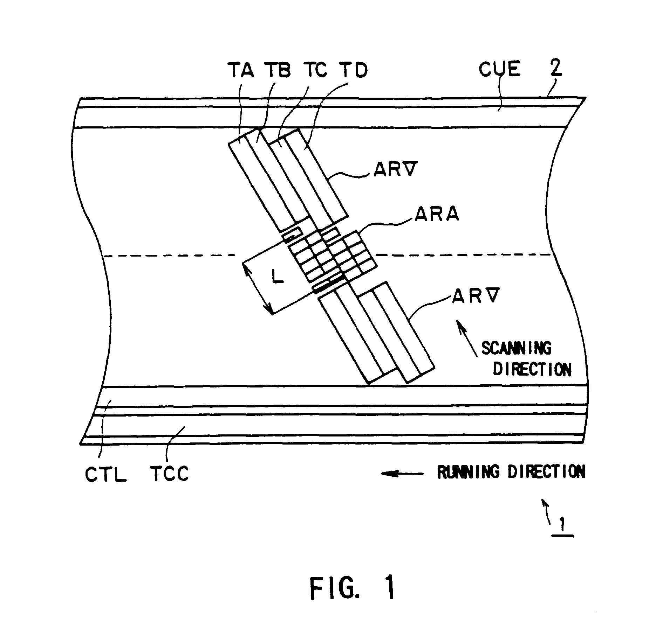

In Fig. 1, 1 generally designates a recording format of a video tape recorder incorporating the present invention, in which three recording tracks CUE, CTL and TCC are formed in the longitudinal direction of a magnetic tape 2.

Among them, in the recording track CUE formed at the upper side of the magnetic tape 2, an audio signal of one channel is recorded in the form of analog signal, so as to enable the reproduction of the audio signal even when the magnetic tape is quickly forwarded.

Meanwhile, the recording tracks CTL, TCC formed at the lower side are formed to record a control signal and a time record signal respectively such that the time record signal is reproduced for the editing process or the like and the time record signal can be interpolated with the control signal as a basis in case of quickly forwarding reproduction etc., as required.

In addition, in this recording format 1, recording tracks TA, TB, TC, TD, ... are formed helically in order at the central portion of the magnetic tape 2 for recording digital video signals thereon.

At this time, in the recording format 1, the recording tracks TA, TB, TC, TD, ... are formed closely to each other with a 1/4 of the conventional track pitch i. e. 0.012 [mm] so that the recording tracks TA, TB, TC, TD, ... are formed at high density, thereby enabling an efficient recording of the digital video signals.

In the recording tracks TA, TB, TC, TD, ..., the digital video signals are recorded by a recording head having positive and negative azimuth angles respectively so as to perform the azimuth recording with the successive recording tracks TA and TB, TC and TD, ... respectively forming pairs.

Further, in these paired recording tracks TA and TB, TC and TD, ..., the scanning start end and the scanning finish end are formed to substantially accorded, dividing the recording area into the longitudinal direction of the recording tracks TA, TB, TC, TD, ....

A recording area ARA for the audio signal is formed at the central position of the recording tracks TA, TB, TC, TD, ..., and an audio signal of four channel is PCM-recorded on this audio signal recording area ARA.

Further, at both ends of the audio signal recording area ARA, a video signal recording area ARV is formed with a predetermined recording area therebetween, and the digital video signal is recorded in this video signal recording area ARV.

For the video signal recording area ARV, six recording tracks act to record the video signals for one frame, and furthermore the digital video signal and the audio signal are recorded in accordance with Class 4 Partial Response method.

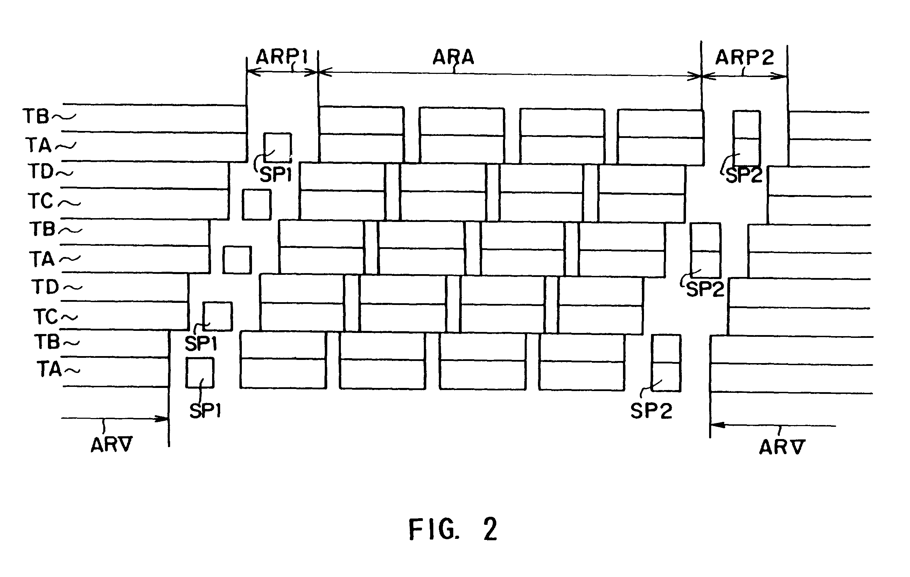

As shown in Fig. 2, a first and a second recording areas ARP1 and ARP2 are formed between the audio signal recording area ARA and the video signal recording area ARV, and a pilot signal for the tracking control is recorded in these first and second recording areas ARP1 and ARP2.

In the second recording area ARP2 at the scanning start end side, the second pilot signal SP2 is recorded at two recording track period with respect to the paired recording tracks TA and TB, TC and TD with a predetermined distance spaced in the forward or reward direction. In this format, a burst signal of frequency 417 [kHz] which is scarcely subject to the azimuth loss is selected as the second pilot signal SP2.

At this time, the second pilot signal SP2 is recorded with the same phase in the longitudinal direction of the recording tracks TA and TB thereon. As a result, even when the magnetic head scans stepping over the recording tracks TA and TB, the pilot signal could be reproduced without no waveform distortion.

Further, a burst signal of a frequency 16 [MHz] subject to azimuth loss (hereinafter referred to as guard signal) is recorded on an area of not recording the second pilot signal SP2 such that the second pilot signal SP2 is recorded separately from the audio signal recording area, the video signal recording area and the contiguous tracks.

Therefore, in the second recording area ARP2, even when the magnetic head tracks off toward the contiguous area with respect to the second pilot signal SP2 recorded-area, only the second pilot signal SP2 can be securely detected.

In this manner, since the second pilot signal SP2 almost without azimuth loss is recorded at a two-recording track period, it is possible to reproduce the second pilot signal even when the two magnetic heads tracks off forwardly or rearwardly in a range of two tracks with respect to the paired recording tracks TA and TB, TC and TD, such that the second pilot signal SP2 can be securely detected even when the scanning position of the magnetic head changes.

For reference, if the off-track takes place for a range of more than two tracks, in this embodiment, the second pilot signal can be reproduced from a recording track with four tracks remote therefrom. Thus, the second pilot signal can be detected irrespective of the scanning position on the magnetic tape.

Moreover, even if at this time the magnetic head tracks off to and scans a contiguous recording track on which a guard signal is recorded, only the second pilot signal can be detected. As a result, undesirable signal leakage from the contiguous recording track can be prevented so as to enable to securely detect the second pilot signal SP2 only from the target track. In this embodiment, it is constructed that the tracking operation is roughly carried out on the basis of the reproducing signal of the second pilot signal SP2.

In practice, in this type of video tape recorder, the signal leakage from the contiguous tracks has been prevented by performing the azimuth recording. Therefore, when the tracking control is executed using a pilot signal of high frequency, if equal to or more than one track is tracked off, the pilot signal cannot be detected, thereby making the tracking control difficult to be performed.

On the contrary, if the tracking control is carried out using a pilot signal of low frequency, the pilot signal can be detected even if the off-tracking amount increases, since there is no azimuth loss. However, a problem that a leakage from the contiguous recording tracks would arise so as to make the tracking control with high accuracy difficult to be executed.

In particular, when the video signal and the audio signal are recorded using the Class 4 Partial Response as in this embodiment, a signal component of low frequency would be sometimes recorded even for the video and audio signals, and the leakage of this signal component also would deteriorate the tracking accuracy.

However, if, as in this embodiment, a pilot signal of low frequency is recorded at two tracks period and a guard signal is interpolated between the contiguous recording track, the audio signal recording area ARA and the video signal recording area ARV to separately record the second pilot signal SP2, any signal leakage from the contiguous recording tracks, the audio signal recording area ARA and the video signal recording area ARV can be prevented and the pilot signal can be securely detected even when equal to or more than one track of off-tracking takes place, so as to provide more simple and secure tracking control.

It is also possible to reduce the time required to rise for just tracking.

Further, performing the tracking control by combination with the pilot signal SP1 recorded on the first recording area ARP1 would enable more accurate tracking control.

In addition, since a reproducing signal without any waveform distortion can be output by recording the pilot signal SP2 with the same phase for the recording tracks TA and TB, the pilot signal SP2 can be securely detected thereby, and correspondingly the accuracy of the tracking control would be enhanced.

In accordance therewith, the first pilot signal SP1 is recorded with a distance remote from the contiguous track by performing the recording for each recording track, and with a predetermined distance from the forward and rearward audio signal recording area ARA and the video signal recording area ARV, and in the case of the present embodiment a signal-free area is formed between the recording areas ARA, ARV and the contiguous track.

Therefore, for the first pilot signal SP1, when the magnetic heads A to D track off to scan, the signal level of the reproducing signal would be reduced, and if the off-tracking amount becomes equal to or more than one track, the reproduction would be impossible.

In view of this, in this format, it is composed that the tracking control is roughly regulated in accordance with the reproducing signal of the second pilot signal SP2 and the tracking control is finely regulated in accordance with the reproducing signal of the first pilot signal, thereby enabling the tracking control with higher accuracy.

Namely, for the second pilot signal SP2, while there is an advantage that the reproducing signal can be detected even when equal to or more than one track is tracked off due to the low frequency, the disadvantage is the low tracking accuracy.

Meanwhile, for the first pilot signal SP1, the advantage is the high accuracy of the tracking control due to the high frequency and the disadvantage is that the tracking control becomes impossible when equal to or more than one track is tracked off.

Therefore, according to this embodiment, the tracking control is roughly regulated on the basis of the second pilot signal SP2 and finely regulated on the basis of the first pilot signal SP1 for mutually compensating the disadvantages thereof. As a result, even when equal to or more than one track is tracked off, the tracking control can be executed with high accuracy.

Further, for a video tape recorder, since the first and the second recording areas ARP1 and ARP2 are disposed before and behind the audio signal recording area as the center, the tracking control can be performed with high accuracy with the substantially central position of the respective recording track as basis.

In practice, when such type of pilot signals SP1 and SP2 are recorded at the scanning start/end for tracking, the off-tracking amount tends to be increased at the side end opposed to the recording position of the pilot signals SP1 and SP2 due to the expansion and contraction of the magnetic tape 2 in the longitudinal direction and the inter-machine dispersion of the scanning angle, and the C/N ratio of the reproducing signal would be correspondingly and significantly deteriorated.

However, as in this embodiment, if the pilot signals SP1 and SP2 are recorded substantially at the central position in the scanning direction, the deterioration of the large off-tracking amount can be correspondingly dispersed to the scanning start end side and the scanning finish end side, thereby preventing significant deterioration of the C/N ratio of the reproducing signal.

### (2) Principles of the Tracking Control

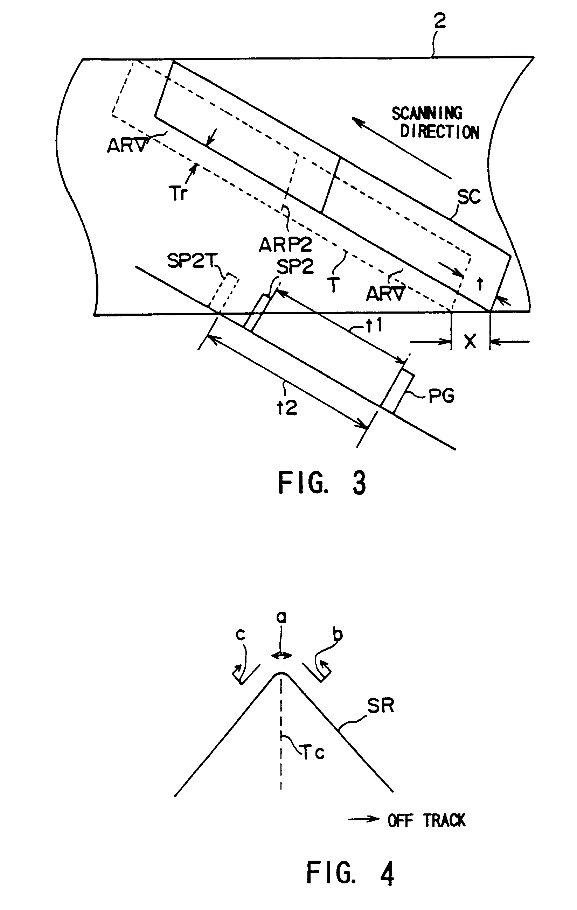

Fig. 3 shows principles of the tracking control in which the tracking control is executed to accord the scanning course SC with the recording track T.

For a video tape recorder in this case, there is an off-track with a distance Tr in the direction perpendicular to the recording track T. Therefore, it is understood that the just tracking is obtained by moving the position of the recording track for a distance X in the longitudinal direction of the magnetic tape 2 by controlling the magnetic tape driving system.

Namely, the tracking control can be desirably performed by controlling the magnetic tape driving system to make the distance X zero. In this embodiment, the tracking error amount is roughly detected by performing time measurement (i.e. in this case the time t is detected) of the distance X with the second recording area ARP2 as a basis.

Therefore, in this embodiment, the time t1 required until the second pilot signal SP2 rises after the rising of a drum PG signal PG in synchronicity with the rotation of the rotary drum.

In this case, when the magnetic head is accurately scanning the reproducing track T, the second pilot signal SP2 rises after a predetermined period t2 has passe with respect to the drum PG signal PG. Therefore, it is understood that the time difference between t1 and t2 is proportional to the off tracking amount Tr.

However, since the period of the signal itself is too long in such a pilot signal SP2 of low frequency, the off tracking amount cannot be accurately detected by the time measurement.

Therefore, the second pilot signal is used for rough tracking control for its advantage that the off tracking amount can be detected even when equal to or more than one track of offset exists, while the first pilot signal SP1 is used for fine adjustment of the off tracking amount.

Namely, as shown in Fig. 4, for the first pilot signal SP1, a signal with large azimuth loss is recorded for each track in the burst form. Therefore, if any off tracking from the track center, the signal level of the reproducing signal would be abruptly lowered.

In view of this, by controlling the magnetic tape driving system to track off in a fine range as shown by arrow a, and judging that an off tracking has taken place when the signal level abruptly falls as shown by arrows b and c, it becomes possible to execute the tracking control with high accuracy.

Also for the conventional video tape recorder (a video tape recorder with 8 [mm] of the magnetic tape width) has incorporated a method for performing the tracking control by detecting the signal level of the pilot signal, as in this embodiment.

However, this conventional tracking control features to perform the tracking control by detecting leakage from the contiguous tracks, therefore, such a high-accuracy tracking control as performed in this embodiment is impossible.

Thus, by recording the second pilot signal of no azimuth loss and the first pilot signal of large azimuth loss, roughly correcting the off tracking by the second pilot signal, and finely correcting the off tracking by the first pilot signal, it is possible to securely perform the tracking control even when the recording track is formed with high density.

### (3) Composition of the Video Tape Recorder

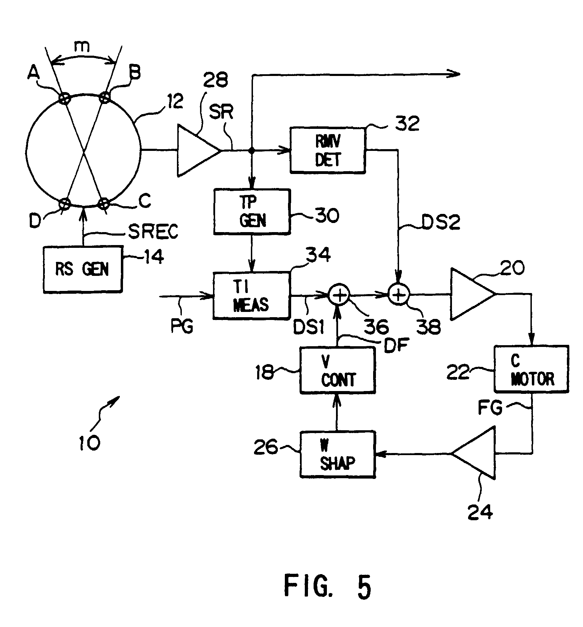

For the video tape recorder 10, as shown in Fig. 5, a plurality of magnetic heads A to D are mounted on the rotary drum 12 and used by being switched for recording the video signal and the audio signal in accordance with the aforementioned format.

Namely, the magnetic heads A and B of positive and negative azimuth angles are mounted on the rotary drum 12 with a predetermined angle distance m therebetween, and further the magnetic heads C and D of positive and negative azimuth angles are mounted thereon to oppose at an angle of 180 degrees to the magnetic heads A and B of the positive and negative azimuth.

In the video tape recorder 10, the recording signal SREC generated by the recording signal generating circuit 14 is output by the magnetic heads A to D for sequentially forming the recording tracks in the aforementioned format.

At this time, in the video tape recorder 10, the magnetic tape is wound around the rotary drum 12 with a 180 degrees of winding angle such that the paired magnetic heads A and B, C and D form the recording tracks TA and TB, TC and TD respectively, substantially at the same timing.

Further, at this time, in the recording signal generating circuit 14, the divergence of the scanning timing between the preceding pair of magnetic heads A and C and the latter pair of magnetic heads B and D is corrected by changing the timing of the recording signals SREC to be output to the magnetic heads A to D, thereby sequentially forming the recording tracks in a predetermined format.

In addition, at the time of inserting edition, the recording signal generating circuit 14 outputs necessary recording signal SREC only for a period during which the magnetic heads A to D scan predetermined areas of the video signal recording area ARV or the audio signal recording area ARA in accordance with the editing mode.

Consequently, in the video tape recorder 10, even at the time of inserting edition in addition to in the reproducing mode, it is possible to perform the tracking control globally on the basis of the reproducing signal SR obtained from the first and the second recording areas ARP1 and ARP2.

Namely, in the video tape recorder 10, the capstan motor 22 is driven by a motor driving circuit 20 on the basis of velocity control data DF output from the velocity control circuit 18. At this time, a rotating velocity detecting signal FG varying in accordance with the rotating velocity of the capstan motor 22 is amplified by the amplifying circuit 24 and thereafter is wave-shaped by a wave-shaping circuit 26 to be output to the velocity control circuit 18.

The velocity control circuit 18 rotating drives the capstan motor 22 on the basis of the rotating velocity detecting signal FG at a predetermined rotating velocity.

Further the video tape recorder 10, after amplifying the reproducing signal SR output from the magnetic heads A to D by the reproducing and amplifying circuit 28, outputs it to a timing pulse generating circuit 30 and an RF maximum value detecting circuit 32.

Here, the timing pulse generating circuit 30 extracts signal component of the second pilot signal by a band-pass-filter circuit and performs envelop-detection on it for detecting the signal level of the second pilot signal SP2.

Further, the timing pulse generating circuit 30 supplies the envelop-detected output to a comparing circuit providing a compared result with a predetermined reference level, thereby detecting the rising of the second pilot signal SP2.

After rising of the counter operation simultaneously with the rising of the drum PG signal PG, the time interval measuring circuit 34 controls to step the counting operation simultaneously with the rising of the second pilot signal on the basis of the detected result of the timing pulse generating circuit 30, so as to measure the rising time of the second pilot signal SP2.

Further, the time interval measuring circuit 34 provides a compared result of this counted result and a predetermined reference value, and outputs phase control data DS1 in accordance with the compared result.

Thus, in the video tape recorder 10, the capstan motor 22 is driven by adding phase controlling data DS1 to the velocity control data DF in the adding circuit 36 so as to roughly control the tracking with the second pilot signal SP2 as a basis.

On the other hand, the RF maximum value detecting circuit 32 extracts the signal component of the first pilot circuit by the band pass filter circuit for envelop detection, thereby detecting the level of the first pilot signal SP1.

Further, the RF maximum value detecting circuit 32 provide a compared result of the envelope detected output and an envelope detected output of one period before accumulated in a predetermined memory means for detecting increase or decrease of the signal level of the first pilot signal SP1, and outputs phase control data DS2 on the basis of the detected result.

In this manner, in the video tape recorder 10, the adding circuit 38 adds the phase control data DS2 to the adding signal from the adding circuit 36, and the resulting added signal acts to drive the capstan motor 22 so as to enable fine tracking control with the first pilot signal SP1 as a basis.

On inserting edition, when the signal level of the first pilot signal SP1 is detected, if the recording signal SREC is supplied to the magnetic head B, it invades the reproducing signal Sr by crosstalk, disturbing accurate detection of the signal level of the first pilot signal SP1.

To cope with such a problem, in this embodiment, the angle distance m between the magnetic heads A and B, and C and D are set to 20 degrees, and the distance L (Fig. 1) between the first recording area ARP1 and the second recording area ARP2 is set to a predetermined value, such that at the same timing as the preceding magnetic heads A and C scan the audio signal recording area ARA and thereafter scan the recording area ARP1 of the first pilot signal SP1, the latter magnetic head B and D scan the recording area ARP1 of the second pilot signal SP2.

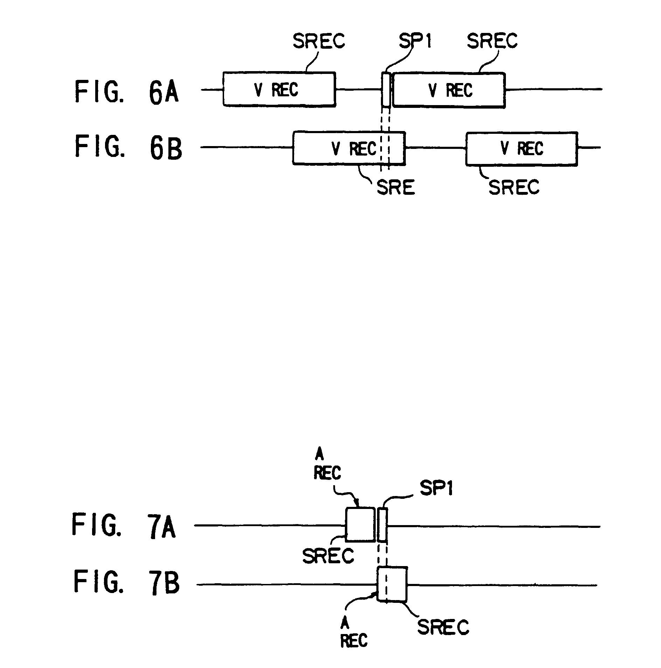

In practice, as shown in Figs. 6A and 6B, if the angle distance m is set to a large value for a distance L between the first and second recording areas ARP1 and ARP2, the recording signal of the video signal is supplied to the magnetic head B (D) (Fig. 6B) during the first pilot signal SP1 is reproduced by the magnetic head A (C) (Fig. 6A), and in this case the recording signal SREC of the video signal SREC will invade the reproducing signal of the first pilot signal SP1.

On the contrary, as shown in Figs. 7A and 7B, if the angle distance m is set to a small value for the distance L between the first and the second recording areas ARP1 and ARP2, the recording signal SREC of the audio signal comes to be supplied to the magnetic head B (D) (Fig. 7B) during the first pilot signal SP1 is reproduced by the magnetic head A (C) (Fig. 7A), in which case the recording signal SREC of the audio signal will invade the reproducing signal of the first pilot signal.

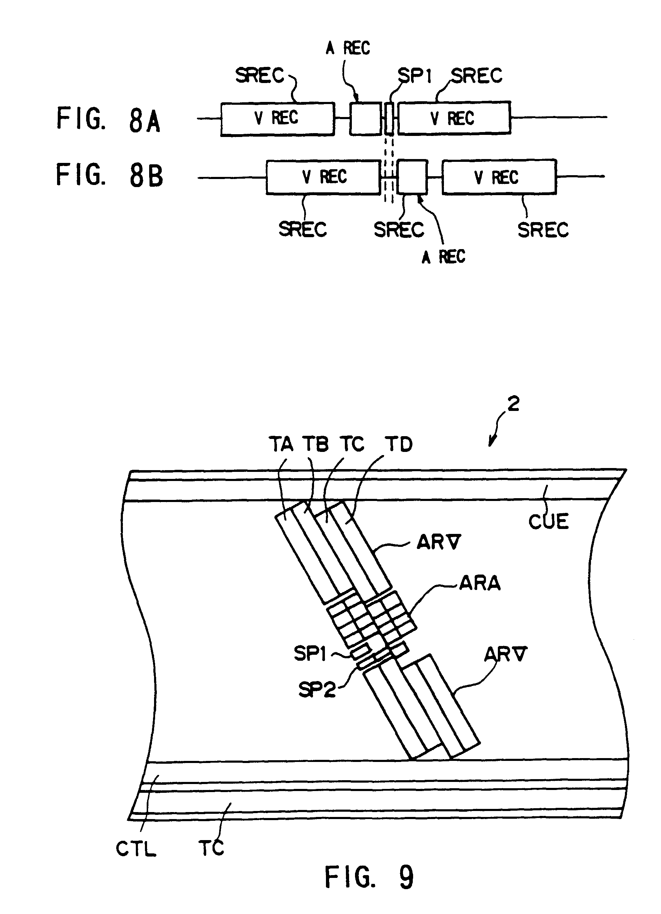

In contrast, as shown in Figs. 8A and 8B, in this embodiment, the magnetic head B (D) scans the second recording area ARP2 (Fig. 8B) during the first pilot signal SP1 is reproduced by the magnetic head A (C) (Fig. 8A) so as to prevent the invasion of the recording signal SREC.

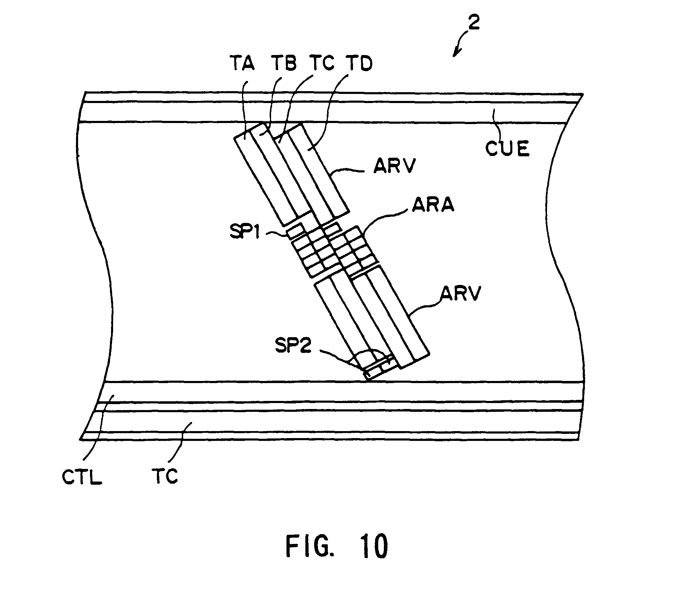

Meanwhile, another method where the first and second recording areas ARP1 and ARP2 are mutually closely formed can be considered as shown in Fig. 9. However, in this method, for preventing the cross talk between the paired magnetic heads A and B (C and D) as in this embodiment, it is necessary to very closely dispose the magnetic heads A and B (C and D), and practically it becomes impossible to mount the magnetic heads on the rotary drum 12.

Further, as shown in Fig. 10, when the first and second recording areas ARP1 and ARP2 are disposed with one video signal recording area ARV and audio signal recording area ARA therebetween, the paired magnetic heads A and B (C and D) must be disposed with 90 degrees of angle space. This means that a preceding recording head etc. cannot be further mounted on the rotary drum 12.

Therefore, according to this embodiment, the format is set that the angle space between the magnetic head A and B (C and D) can be set to a practically sufficient value m, and that when the first and second recording area ARP1 and ARP2 are disposed with the audio signal recording area ARA therebetween such that the preceding magnetic head A (C) reproduces the pilot signal SP1 for the tracking control, the following magnetic head B (D) scans the second recording area ARP2. As a result, the tracking accuracy can be simply and certainly improved.

Further, at this time, by recording the second pilot signal SP2 by interpolating the guard signal and recording the first pilot signal SP1 by forming a signal-free are therearound, even when the recording track forming timing delicately changes at the inserting edition, an accumulation of the timing divergence can be prevented from undesirably affecting the tracking control. Therefore, correspondingly, the digital video signal can be reproduced even if the inserting edition is repeated.

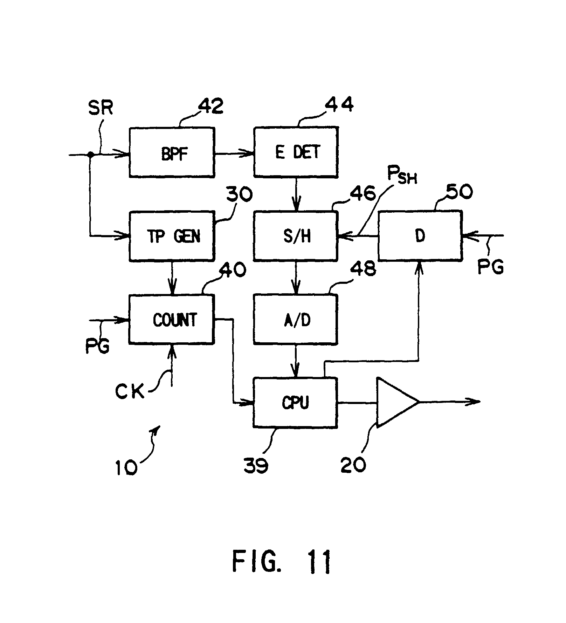

As shown in Fig. 11, in practice, for the video tape recorder 10 the tracking control is carried out on the basis of the result of calculation processing of the central processing unit (CPU) 39.

Namely, in the video tape recorder 10, predetermined clock signals CK are counted in the counter circuit 40 with the output signal from the timing pulse generating circuit 30 and the drum PG signal PG as basis, thereby performing the time measurement for the second pilot signal SP2.

Then, in the video tape recorder 10, the counted result from the counter 40 is calculated in the CPU 39 to generate the first phase control data DS1 with which the time interval measuring circuit 34 is formed in the CPU 39 and the counter 40.

Further, in the video tape recorder 10, after the band pass filter circuit (BPF) 42 extracts the first pilot signal SP1 from the reproducing signal SR, the envelope detecting circuit 44 detects the envelope.

In addition, in the video tape recorder 10, a sample hold circuit (S/H) 46 sample-holds the output signal from the envelope detecting circuit 44, and an analog/digital converting circuit (A/D) 48 quantizes it.

Thus, the video tape recorder 10 generates the phase control data DS2 by supplying the output signal of the analog/digital converting circuit 48 to the CPU 39, and the phase control data DS2 are then added to the phase control data DS1 and the velocity control data DF for driving the capstan motor 22.

In this manner, in the video tape recorder 10, the RF maximum value detecting circuit is composed of the BRF 42, the envelope detecting circuit 44, the S/H 46, the A/D 48 and the CPU 39.

When the capstan motor is controlled, in the CPU 10, a delay time of a delay circuit 50 is controlled on the basis of the time measurement result (i.e. equivalent to the counted value of the counter 40) of the second pilot signal SP2, thereby delaying the drum PG signal PG by a predetermined time for generating a sampling pulse P_{SH}.

### (4) Advantage of the Embodiment

According to the aforementioned composition, by recording the first pilot signal of large azimuth loss and the second pilot signal without any azimuth loss near the central portion of the recording track, rough tracking control and fine tracking control can be executed on the basis of the second and first pilot signals respectively. Therefore, even when the off tracking amount is large, the tracking control can be executed easily and with high accuracy, and correspondingly even when the recording track is formed with high density, the tracking control can be securely carried out.

At this time, since the first and the second pilot signals are recorded with one track cycle and two tracks cycle respectively, the tracking control can be securely performed.

Further, since the first and the second pilot signals are recorded by interpolating a predetermined guard signal and a signal-free area, undesirable signal leakage can be avoided, thereby enable a secure tracking control.

### (5) Other Embodiment

Although in the aforementioned embodiment the first and the second pilot signals have been selected to have predetermined frequencies, the frequencies of the first and the second pilot signals can be set, in accordance with the presence of the azimuth loss without limited to the case of the described embodiment, to different values as required.

Further, in the aforementioned embodiment a case where the first and the second pilot signals are recorded at substantially the central portion of the recording track has been mentioned. However, the present invention is not limited to this case, and the pilot signal can be recorded on a variety of positions on the recording track when the recording accuracy is practically sufficient.

Further, according to the aforementioned embodiment, the first and the second pilot signals have been recorded with the audio signal recording area therebetween. However, the present invention is not limited to this case, and the first and the second pilot signals can be recorded on desired positions if the leakage on the inserting edition can be securely prevented and further if there is no need of tracking account of the inserting edition.

Further in this case, it is also possible to change the recording positions of the first and the second pilot signals for each recording track.

Furthermore in this case, if the first and the second pilot signals can be securely separated on reproduction in a practically sufficient range by using BPF etc., the first and the second pilot signals can be recorded on the same area.

Moreover in the aforementioned embodiment a case where the second pilot signal is recorded by interpolating the guard signal has been described. However, this invention is not limited to such a case, and alternatively it is also possible to record the second pilot signal by interpolating a signal-free area.

In addition, for this case, if any low frequency signal component without azimuth loss is not recorded on the contiguous tracks, it is possible to eliminate such signal-free and guard signal areas.

Further in the aforementioned embodiment, a case where the first and the second pilot signals are recorded with one track period and two tracks period has been described. However, the present invention is not limited to such a case, and the period can be freely established in accordance with the disposition of the magnetic head etc. if the undesirable influence from the contiguous recording tracks etc. can be prevented.

Further in the aforementioned embodiment, a case where the second pilot signal is recorded in phase-matched state has been described. However, the present invention is not limited to such a case, and may omit such a phase matching so long as the waveform distortion is within a practically acceptable range.

Further in the aforementioned embodiment, a case where burst signals of a predetermined frequency is selected as the first and second pilot signals has been described. However, this invention is not limited to such a case, and a variety of signals can be selected as the first and the second pilot signals so long as the signal level of the pilot signal and the rising timing of the pilot signal respectively can be detected.

Furthermore, in the aforementioned embodiment a case where the digital video signal is recorded/reproduced using Class 4 Partial Response has been described. However, the present invention is not limited to such a case and can be widely applied to such cases that the digital video signal is recorded and reproduced using a variety of recording methods and that a digital signal other than the digital video signal is recorded.

While there has been described in connection with the preferred embodiments of the invention, it will be obvious to those skilled in the art that various changes and modifications may be aimed, therefore, to cover in the appended claims all such changes and modifications as fall within the scope of the invention.

## Claims

1. A magnetic recording and/or reproducing apparatus (10) comprising:
a rotary drum (12) having a magnetic tape (2) helically wrapped therearound;
means for advancing (22) the magnetic tape relative to said rotary drum;
two magnetic heads (A,B;C,D) mounted on said rotary drum and scanning said magnetic tape for recording a recording signal (ARA,ARV) on the tape in successive inclined recording tracks as the tape is advanced, said magnetic heads having mutually different azimuth angles and forming respective ones of said inclined tracks;
means for generating first (SP1) and second (SP2) pilot signals and for recording said first and second pilot signals with said recording signal in said inclined tracks by means of at least one of said magnetic heads, said first pilot signal having a higher frequency than said second pilot signal; and
means for reproducing (28) said pilot signals from said inclined tracks by means of said magnetic heads, said first pilot signal having a frequency that is sufficiently high to result in substantial azimuth loss upon reproduction and said second pilot signal having a frequency that is sufficiently low to result in little azimuth loss upon reproduction: characterised by
tracking control means (39) for performing rough tracking control on the basis of the reproduced second pilot signal (SP2) and fine tracking control on the basis of the reproduced first pilot signal (SP1) said tracking control means including means for detecting a level of said reproduced first pilot signal and for controlling said means for advancing the magnetic tape so as to maximize the detected level of the reproduced first pilot signal.

2. A magnetic recording and/or reproducing apparatus of claim 1, wherein in the recording track:
said means for recording is arranged to form first (ARP1) and second (ARP2) recording areas in the longitudinal direction on the recording track;
the first pilot signal being recorded on the first recording area; and
the second pilot signal being recorded on the second recording area.

3. A magnetic recording and/or reproducing apparatus of claim 1, wherein in the recording track:
said recording means is arranged to form a first recording area substantially at the centre in the longitudinal direction on the recording track, and form a second recording area at a scanning start end side of the magnetic heads with a predetermined distance from the first recording area;
the first pilot signal being recorded on the first recording area;
the second pilot signal being recorded on the second recording area; and
the predetermined recording signal being recorded on an area between the first and the second recording areas.

4. A magnetic recording and/or reproducing apparatus of claim 1, wherein:
said recording means is arranged to form first and second recording areas in the longitudinal direction on the recording track;
and to record the first pilot signal on the first recording area; and
in successive first and second recording tracks in the longitudinal direction of the magnetic tape on the second recording area, to record the second pilot signal on the first recording track, and to form a guard signal of higher frequency subject to the azimuth loss or a signal-free area on the second recording track.

5. A magnetic recording and/or reproducing apparatus of claim 1, wherein:
said recording means is arranged to form first and second recording areas in the longitudinal direction on the recording track;
the first pilot signal being recorded on the first recording area; and
the second pilot signal being recorded on the second recording area in a phase-matched state with that of the contiguous recording track.

6. A magnetic recording and/or reproducing apparatus of claims 1, 2, 3, 4 or 5, wherein:
the plurality of magnetic heads are arranged such that a recording track having a positive azimuth angle and a recording track having a negative azimuth angle are alternately and sequentially formed in the longitudinal direction of the magnetic tape by disposing the magnetic heads of positive and negative azimuth angles to form pairs (A,B;C,D); and
on the first recording area, the first pilot signal is recorded on the recording track of positive or negative azimuth angle, and a signal-free area is formed on the following recording track of respective negative or positive azimuth angle.

7. A magnetic recording and/or reproducing apparatus of claim 1, wherein:
said recording means is arranged to form a first recording area in the longitudinal direction of the recording track and to form a second recording area at a scanning start end side of the magnetic head with a predetermined distance from the first recording area;
the first pilot signal being recorded on the first recording area;
the second pilot signal being recording on the second recording area;
a predetermined recording signal being recorded on an area between the first and the second recording areas;
a plurality of magnetic heads being arranged such that the recording track having a positive azimuth angle and a recording track having a negative azimuth angle are alternately and sequentially formed in the longitudinal direction of the magnetic tape by disposing the magnetic heads of positive and negative azimuth angle to form pairs; and
the magnetic heads having the positive and the negative azimuth angles being arranged on a rotary drum (12) such that the magnetic heads having the negative or positive azimuth angle scan the second recording area on scanning of the first recording area by the recording heads having the respective positive or negative azimuth angle.

8. A magnetic recording and/or reproducing apparatus of claim 1, wherein:
the tracking control means is arranged to detect the timing of reproducing the second pilot signal on the basis of a predetermined reference signal (P9), said means for advancing the magnetic tape being controlled according to the result of the timing detection to perform said rough tracking control.

## Patentansprüche

1. Magnetische Aufzeichnungs- und/oder Wiedergabevorrichtung (10) aufweisend:
eine drehbare Trommel (12), mit einem spiralförmig darum gewickelten Magnetband (2);
eine Einrichtung (22) zum Antrieb des Magnetbandes relativ zu der drehbaren Trommel;
zwei Magnetköpfe (A, B; C, D), die auf der drehbaren Trommel befestigt sind und das Magnetband zur Aufzeichnung eines Aufzeichnungssignals (ARA, ARV) auf dem Band in aufeinanderfolgenden schrägen Aufzeichnungsspuren abtasten, wenn das Band vorwärts bewegt wird, wobei die Magnetköpfe verschiedene Azimuthwinkel aufweisen und jeweilige der schrägen Spuren bilden;
eine Einrichtung zur Erzeugung von ersten (SP1) und zweiten (SP2) Pilotsignalen und zur Aufzeichnung der ersten und zweiten Pilotsignale mit dem Aufzeichnungssignal auf den schrägen Spuren mittels wenigstens einem der Magnetköpfe, wobei das erste Pilotsignal eine höhere Frequenz hat als das zweite Pilotsignal; und
eine Einrichtung zur Wiedergabe (28) der Pilotsignale von den schrägen Spuren mittels der Magnetköpfe, wobei das erste Pilotsignal eine Frequenz aufweist, die genügend hoch ist, um einen merklichen Azimuth-Verlust bei der Wiedergabe hervorzurufen und wobei das zweite Pilotsignal eine Frequenz hat, die genügend niedrig ist, um einen geringen Azimuth-Verlust bei der Wiedergabe hervorzurufen;
**gekennzeichnet durch**
eine Spurfolgesteuereinrichtung (39) zur Ausführung einer groben Spurfolgesteuerung auf Basis des wiedergegebenen zweiten Pilotsignals (SP2) und einer feinen Spurfolgesteuerung auf der Basis des wiedergegebenen ersten Pilotsignals (SP1), wobei die Spurfolgesteuereinrichtung eine Einrichtung zur Erfassung eines Pegels des wiedergegebenen ersten Pilotsignals und zur Steuerung der Einrichtung zum Antrieb des Magnetbandes aufweist, um den erfaßten Pegel des wiedergegebenen ersten Pilotsignals zu maximieren.

2. Magnetische Aufzeichnungs- und/oder Wiedergabevorrichtung gemäß Anspruch 1, wobei die Aufzeichnungseinrichtung ausgebildet ist:
in der Aufzeichnungsspur erste (ARP1) und zweite (ARP2) Aufzeichnungsbereiche in Längsrichtung der Aufzeichnungsspur zu bilden, wobei
das erste Pilotsignal in dem ersten Aufzeichnungsbereich; und
das zweite Pilotsignal in dem zweiten Aufzeichnungsbereich aufgezeichnet wird.

3. Magnetische Aufzeichnungs- und/oder Wiedergabevorrichtung gemäß Anspruch 1, wobei die Aufzeichnungseinrichtung ausgebildet ist:
in der Aufzeichnungsspur den ersten Aufzeichnungsbereich im wesentlichen in der Mitte in Längsrichtung auf der Aufzeichnungsspur zu bilden und eine zweiten Aufzeichnungsbereich an einer Abtast-Start-Endseite der Magnetköpfe mit einer festgelegten Entfernung von dem ersten Aufzeichnungsbereich zu bilden; wobei
das erste Pilotsignal in dem ersten Aufzeichnungsbereich aufgezeichnet wird;
das zweite Pilotsignal in dem zweiten Aufzeichnungsbereich aufgezeichnet wird; und
das festgelegte Aufzeichnungssignal in einem Bereich zwischen dem ersten und dem zweiten Aufzeichnungsbereich aufgezeichnet wird.

4. Magnetische Aufzeichnungs- und/oder Wiedergabevorrichtung gemäß Anspruch 1, wobei die Aufzeichnungseinrichtung ausgebildet ist:
erste und zweite Aufzeichnungsbereiche in Längsrichtung auf der Aufzeichnungsspur zu bilden;
das erste Pilotsignal in dem ersten Aufzeichnungsbereich aufzuzeichnen; und
in aufeinanderfolgenden ersten und zweiten Aufzeichnungsspuren in Längsrichtung auf dem Magnetband in dem zweiten Aufzeichnungsbereich das zweite Pilotsignal in der ersten Aufzeichnungsspur aufzuzeichnen und ein Schutzbandsignal höherer, einem Azimuth-Verlust unterworfener Frequenz in einem signalfreien Bereich auf der zweiten Aufzeichnungsspur auszubilden.

5. Magnetische Aufzeichnungs- und/oder Wiedergabevorrichtung gemäß Anspruch 1, wobei die Aufzeichnungseinrichtung ausgebildet ist:
erste und zweite Aufzeichnungsbereiche in Längsrichtung auf der Aufzeichnungsspur zu bilden; wobei
das erste Pilotsignal in dem ersten Aufzeichnungsbereich; und
das zweite Pilotsignal in dem zweiten Aufzeichnungsbereich in einem phasenabgeglichenen Zustand mit demjenigen der benachbarten Aufzeichnungsspur aufgezeichnet wird.

6. Magnetische Aufzeichnungs- und/oder Wiedergabevorrichtung gemäß Ansprüchen 1, 2, 3, 4, oder 5, wobei:
die mehreren Magnetköpfe so angeordnet sind, daß eine Aufzeichnungsspur mit einem positiven Azimuthwinkel und eine Aufzeichnungsspur mit einem negativen Azimuthwinkel abwechselnd und aufeinanderfolgend in Längsrichtung des Magnetbandes durch Anordnung der Magnetköpfe positiver und negativer Azimuthwinkel ausgebildet werden, um Paare (A, B; C, D) zu bilden; und
wobei in einem ersten Aufzeichnungsbereich das erste Pilotsignal auf die Aufzeichnungsspur des positiven oder negativen Azimuthwinkels aufgezeichnet wird und ein signalfreier Bereich auf der folgenden Aufzeichnungsspur des negativen oder positiven Azimuthwinkels ausgebildet wird.

7. Magnetische Aufzeichnungs- und/oder Wiedergabevorrichtung gemäß Anspruch 1, wobei die Aufzeichnungseinrichtung ausgebildet ist:
einen ersten Aufzeichnungsbereich in Längsrichung auf der Aufzeichnungsspur auszubilden und einen zweiten Aufzeichnungsbereich an einer Abtast-Start-Endseite des Magnetkopfes mit einem festgelegten Abstand von dem ersten Aufzeichnungsbereich auszubilden; wobei
das erste Pilotsignal in dem ersten Aufzeichnungsbereich aufgezeichnet wird;
das zweite Pilotsignal in dem zweiten Aufzeichnungsbereich aufgezeichnet wird;
ein festgelegtes Aufzeichnungssignal in einem Bereich zwischen dem ersten und dem zweiten Aufzeichnungsbereich aufgezeichnet wird;
mehrere Magnetköpfe so angeordnet sind, daß die Aufzeichnungsspur mit dem positiven Azimuthwinkel und eine Aufzeichnungsspur mit einem negativen Azimuthwinkel abwechselnd und aufeinanderfolgend in Längsrichtung des Magnetbandes durch Anordnung der Magnetköpfe positiven und negativen Azimuthwinkels ausgebildet werden, um Paare zu bilden, und
die Magnetköpfe mit den positiven und den negativen Azimuthwinkeln auf einer drehbaren Trommel (12) so angeordnet sind, daß die Magnetköpfe mit dem negativen oder positiven Azimuthwinkel den zweiten Aufzeichnungsbereich beim Abtasten des ersten Aufzeichnungsbereichs durch die Aufzeichnungsköpfe mit dem jeweiligen positiven oder negativen Winkel abtasten.

8. Magnetische Aufzeichnungs- und/oder Wiedergabevorrichtung gemäß Anspruch 1, wobei:
die Spurfolgesteuereinrichtung so ausgebildet ist, die Zeitsteuerung der Wiedergabe des zweiten Pilotsignales auf Basis eines festgelegten Referenzsignals (P9) zu erfassen, wobei die Einrichtung zum Antrieb des Magnetbandes entsprechend dem Ergebnis der Zeitsteuerungserfassung gesteuert wird, um die Grob-Spurfolgesteuerung auszuführen.

## Revendications

1. Un appareil d'enregistrement et/ou de reproduction magnétique (10) comprenant :
un tambour tournant (12) autour duquel une bande magnétique (2) est enroulée en hélice;
des moyens (22) pour faire avancer la bande magnétique par rapport au tambour tournant;
deux têtes magnétiques (A, B; C, D) montées sur le tambour tournant et balayant la bande magnétique, pour enregistrer un signal d'enregistrement (ARA, ARV) sur la bande, dans des pistes d'enregistrement inclinées successives, pendant que la bande est avancée, ces têtes magnétiques ayant des angles d'azimut mutuellement différents et formant des pistes respectives parmi les pistes inclinées;
des moyens pour générer des premier (SP1) et second (SP2) signaux pilotes, et pour enregistrer ces premier et second signaux pilotes avec le signal d'enregistrement dans les pistes inclinées, au moyen de l'une au moins des têtes magnétiques, le premier signal pilote ayant une fréquence supérieure à celle du second signal pilote; et
des moyens (28) pour reproduire les signaux pilotes à partir des pistes inclinées, au moyen des têtes magnétiques, le premier signal pilote ayant une fréquence qui est suffisamment élevée pour occasionner une atténuation d'azimut notable au moment de la reproduction, et le second signal pilote ayant une fréquence qui est suffisamment basse pour occasionner peu d'atténuation d'azimut au moment de la reproduction;
caractérisé par
des moyens de commande de suivi de piste (39) pour effectuer une commande de suivi de piste grossière, sur la base du second signal pilote (SP2) reproduit, et une commande de suivi de piste fine sur la base du premier signal pilote (SP1) reproduit, ces moyens de commande de suivi de piste comprenant des moyens pour détecter un niveau du premier signal pilote reproduit, et pour commander les moyens destinés à faire avancer la bande magnétique, de façon à maximiser le niveau détecté du premier signal pilote reproduit.

2. Un appareil d'enregistrement et/ou de reproduction magnétique selon la revendication 1, dans lequel, dans la piste d'enregistrement:
les moyens pour l'enregistrement sont conçus pour former des première (ARP1) et seconde (ARP2) zones d'enregistrement dans la direction longitudinale sur la piste d'enregistrement;
le premier signal pilote étant enregistré sur la première zone d'enregistrement; et
le second signal pilote étant enregistré sur la seconde zone d'enregistrement.

3. Un appareil d'enregistrement et/ou de reproduction magnétique selon la revendication 1, dans lequel, dans la piste d'enregistrement:
les moyens d'enregistrement sont conçus pour former une première zone d'enregistrement pratiquement au centre dans la direction longitudinale sur la piste d'enregistrement, et pour former une seconde zone d'enregistrement sur un côté d'extrémité de début de balayage des têtes magnétiques, à une distance prédéterminée de la première zone d'enregistrement;
le premier signal pilote étant enregistré sur la première zone d'enregistrement;
le second signal pilote étant enregistré sur la seconde zone d'enregistrement; et
le signal d'enregistrement prédéterminé étant enregistré sur une zone située entre les première et seconde zones d'enregistrement.

4. Un appareil d'enregistrement et/ou de reproduction magnétique selon la revendication 1, dans lequel :
les moyens d'enregistrement sont conçus pour former des première et seconde zones d'enregistrement dans la direction longitudinale sur la piste d'enregistrement;
pour enregistrer le premier signal pilote sur la première zone d'enregistrement; et
dans des première et seconde pistes d'enregistrement successives dans la direction longitudinales de la bande magnétique sur la seconde zone d'enregistrement, pour enregistrer le second signal pilote sur la première piste d'enregistrement, et pour former un signal de garde de fréquence supérieure, soumis à l'atténuation d'azimut, ou une zone exempte de signal, sur la seconde piste d'enregistrement.

5. Un appareil d'enregistrement et/ou de reproduction magnétique de la revendication 1, dans lequel :
les moyens d'enregistrement sont conçus pour former des première et seconde zones dans la direction longitudinale sur la piste d'enregistrement;
le premier signal pilote étant enregistré sur la première zone d'enregistrement; et
le second signal pilote étant enregistré sur la seconde zone d'enregistrement, dans un état de concordance de phase avec celui de la piste d'enregistrement contiguë.

6. Un appareil d'enregistrement et/ou de reproduction magnétique des revendications 1, 2, 3, 4 ou 5, dans lequel :
les têtes de l'ensemble de têtes magnétiques sont conçues de façon qu'une piste d'enregistrement ayant un angle d'azimut positif et une piste d'enregistrement ayant un angle d'azimut négatif soient formées en alternance et séquentiellement dans la direction longitudinale de la bande magnétique, en disposant les têtes magnétiques d'angles d'azimut positif et négatif de façon à former des paires (A, B; C, D); et
sur la première zone d'enregistrement, le premier signal pilote est enregistré sur la piste d'enregistrement d'angle d'azimut positif ou négatif, et une zone exempte de signal est formée sur la piste d'enregistrement suivante d'angle d'azimut négatif ou positif.

7. Un appareil d'enregistrement et/ou de reproduction magnétique selon la revendication 1, dans lequel :
les moyens d'enregistrement sont conçus pour former une première zone d'enregistrement dans la direction longitudinale de la piste d'enregistrement, et pour former une seconde zone d'enregistrement du côté d'une extrémité de début de balayage de la bande magnétique, à une distance prédéterminée de la première zone d'enregistrement;
le premier signal pilote étant enregistré sur la première zone d'enregistrement;
le second signal piloté étant enregistré sur la seconde zone d'enregistrement;
un signal d'enregistrement prédéterminé étant enregistré sur une zone qui est située entre les première et seconde zones d'enregistrement;
un ensemble de têtes magnétiques étant conçues de façon que la piste d'enregistrement ayant l'angle d'azimut positif et une piste d'enregistrement ayant un angle d'azimut négatif soient formées en alternance et séquentiellement dans la direction longitudinale de la bande magnétique, en disposant les têtes magnétiques d'angle d'azimut positif et négatif de façon à former des paires; et
les têtes magnétiques ayant les angles d'azimut positif et négatif étant montées sur un tambour tournant (12), de façon que les têtes magnétiques ayant l'angle d'azimut négatif ou positif balaient la seconde zone d'enregistrement au moment du balayage de la première zone d'enregistrement par les têtes d'enregistrement ayant l'angle d'azimut respectif positif ou négatif.

8. Un appareil d'enregistrement et/ou de reproduction magnétique selon la revendication 1, dans lequel :
les moyens de commande de suivi de piste sont conçus pour détecter la condition temporelle de reproduction du second signal pilote sur la base d'un signal de référence prédéterminé (PG), les moyens pour faire avancer la bande magnétique étant commandés conformément au résultat de la détection de condition temporelle, pour effectuer la commande de suivi de piste grossière.
